# EUROPEAN PATENT APPLICATION

(11) **EP 4 733 182 A1**
(43) Date of publication of application: **29.04.2026**
(21) Application number: 25190218.5
(22) Date of filing: 17.07.2025
(51) Int. Cl.: B62J 43/13, B62J 43/28, B62K 3/02, B62K 19/06, B62K 19/30, B62M 6/90

(54) **FRAME UNIT FOR ELECTRIC BICYCLE**

(30) Priority: 24.10.2024 TW 113140520
(71) Applicant: Astro Tech Co., Ltd., Changhua County (TW)
(72) Inventor: Hu, Samuel, Changhua City, Changhua County (TW); Chen, Chang-Chun, Changhua City, Changhua County (TW)
(74) Representative: Petraz, Gilberto Luigi

(57) **Abstract**

A frame unit (90) has a frame tube (91) and a battery bracket (20). The frame tube (91) has two half casings (10) and an operation opening (911). The battery bracket (20) is disposed inside the frame tube (91) and has a battery seat (21) and a supporting structure (22). The battery seat (21) is located in alignment with the operation opening (911) and has a carrying plate (211) and two wing plates (212) fixed to the frame tube (91). The supporting structure (22) extends from the carrying plate (211) and away from the operation opening (911) to abut the frame tube (91). The battery bracket (20) strengthens the frame unit (90) without thickening the half casings (10), ensures safety of riding, supports a battery, and divides an interior of the frame tube (91) into multiple chambers (S1, S2) for routing cables.

## Description

### 1. Field of the Invention

The present invention relates to a frame unit for an electric bicycle, and particularly to a frame unit improving structural strength.

### 2. Description of Related Art

An electric bicycle is driven by a motor powered by electricity from a battery, and provides comfortable and relaxing riding experience. Thus, the electric bicycle gradually becomes popular around the world.

The battery of a conventional electric bicycle is disposed inside a frame tube of a bicycle frame, which provides protection to the battery. The conventional electric bicycle also forms an operation opening for convenience of replacing or repairing the battery.

However, formation of the operation opening reduces overall structural strength of the bicycle frame. Thereby, the bicycle frame of the conventional electric bicycle may fail to meet the requirements of structural strength in related regulations, which threatens safety of riding.

The main objective of the present invention is to provide a frame unit for an electric bicycle which installs a battery bracket inside the frame tube to increase structural strength of the frame unit for an electric bicycle.

The frame unit for an electric bicycle has a frame tube and a battery bracket. The frame tube has two half casings connected to each other symmetrically and an operation opening formed on the two half casings. The battery bracket is disposed inside the frame tube and has a battery seat and a supporting structure. The battery seat is disposed toward the operation opening and has a carrying plate and two wing plates. The two wing plates respectively extend from two opposite sides of the carrying plate to be fixed to an interior surface of the frame tube. The supporting structure extends from the battery seat along a direction away from the operation opening to abut the interior surface of the frame tube.

Other objectives, advantages and novel features of the invention will become more apparent from the following detailed description when taken in conjunction with the accompanying drawings.

### In the drawings:

Fig. 1 is a perspective view of a first embodiment of a frame unit for an electric bicycle in accordance with the present invention;
Fig. 2 is an exploded view of the frame unit in Fig. 1;
Fig. 3 is a bottom perspective view of a battery bracket of the frame unit in Fig. 2;
Fig. 4 is a bottom perspective view of the battery bracket in Fig. 3 from another side;
Fig. 5 is a sectional side view of the frame unit in Fig. 1;
Fig. 6 is a sectional end view of the frame unit in Fig. 1;
Fig. 7 is a sectional end view of another embodiment of the frame unit in accordance with the present invention;
Fig. 8 depicts a bicycle frame including the frame unit in Fig. 1;
Fig. 9 is a sectional end view of a second embodiment of the frame unit in accordance with the present invention;
Fig. 10 is a sectional end view of a third embodiment of the frame unit in accordance with the present invention;
Fig. 11 is a sectional end view of a fourth embodiment of the frame unit in accordance with the present invention; and
Fig. 12 is a sectional end view of a fifth embodiment of the frame unit in accordance with the present invention.

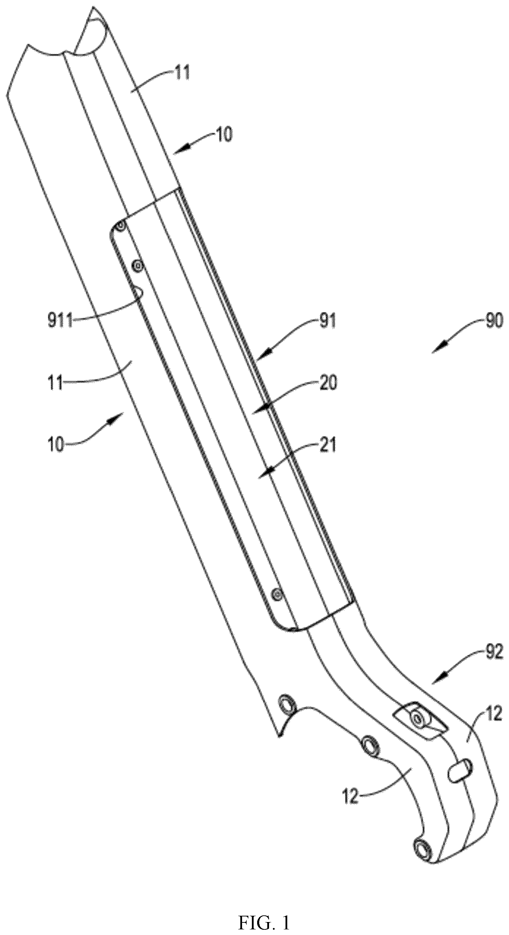

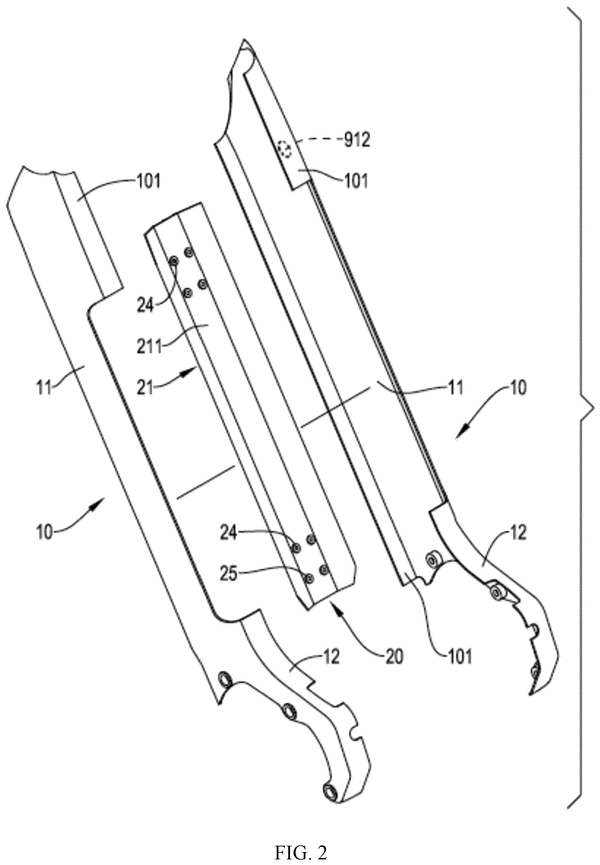

Figs. 1 and 2 show a first embodiment of a frame unit 90 for an electric bicycle in accordance with the present invention, wherein the frame unit 90 is configured for constructing a bicycle frame of an electric bicycle. The frame unit 90 includes a frame tube 91 and a battery bracket 20. The frame tube 91 has two half casings 10 connected to each other symmetrically. The battery bracket 20 is disposed inside the frame tube 91 and increases overall structural strength of the frame unit 90 via technical features described below.

With reference to Figs. 1 and 2, the frame tube 91 is configured for mounting a battery therein. The frame tube 91 has an operation opening 911 for repairing or replacing the battery in the frame tube 91 therethrough. The frame tube 91 may be different components of the bicycle frame according to where a battery is aimed to be mounted. In the embodiment, the frame tube 91 is a down tube and allows the bicycle frame with the frame tube 91 to meet the requirements of structural strength in related regulations even without a top tube. In other embodiments, the frame unit 90 may also be another tube of the bicycle frame. Each one of the two half casings 10 constructing the frame tube 91 has a frame tube portion 11. The two half casings 10 are connected to each other symmetrically, such that said frame tube portions 11 of the two half casings 10 are connected to form the frame tube 91.

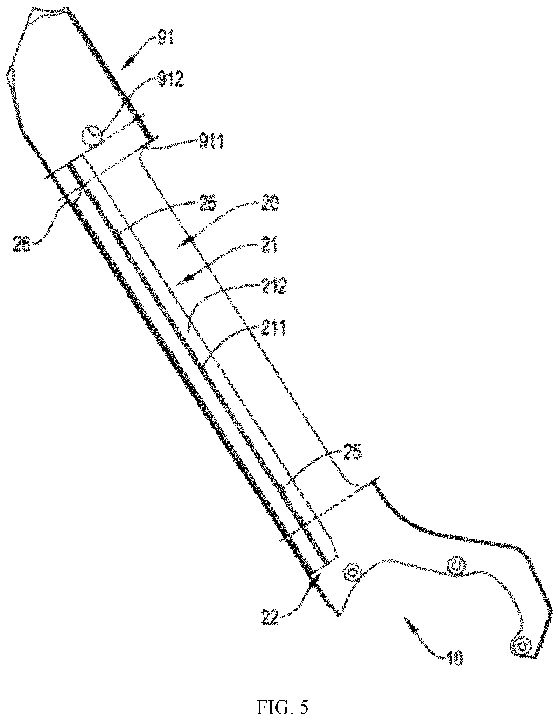

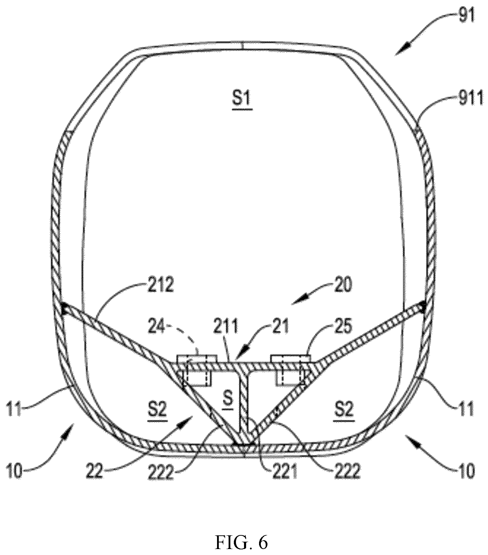

With reference to Figs. 2 to 4, the battery bracket 20 has a battery seat 21 and a supporting structure 22 connected to each other. The battery seat 21 is configured for mounting a battery thereon. With reference to Figs. 5 and 6, the battery bracket 20 is disposed inside the frame tube 91 between the two half casings 10. A location of the battery seat 21 is aligned with the operation opening 911, and two opposite sides (left and right) of the battery seat 21 are fixed to an interior surface of the frame tube 91 (as shown in Fig. 6). The alignment of the battery seat 21 and the operation opening 911 means: all or a portion of the battery seat 21 is located within a scope of the operation opening 911 in a longitudinal direction of the frame tube 91, as long as a battery can be mounted onto or detached from the battery seat 21 through the operation opening 911.

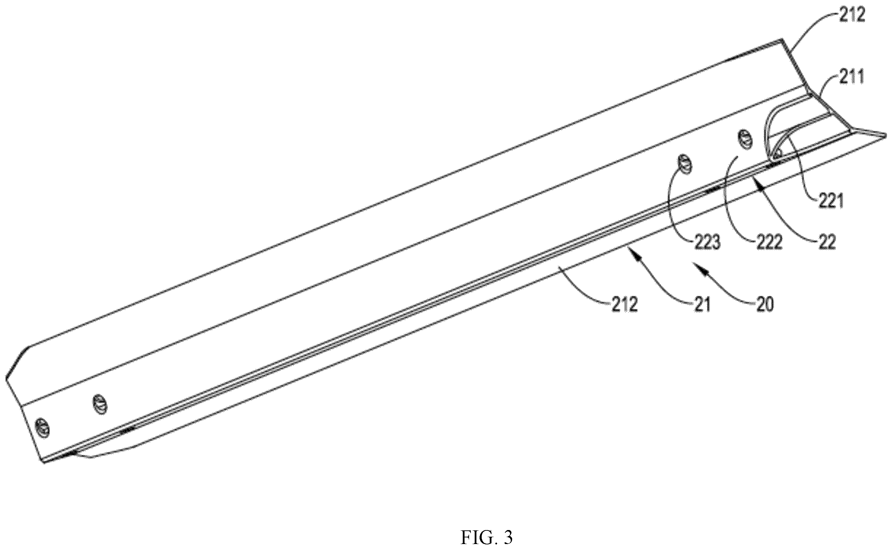

With reference to Figs. 3, 4, and 6, the battery seat 21 has a carrying plate 211 and two wing plates 212. The carrying plate 211 has two opposite surfaces respectively facing and away from the operation opening 911 and is configured for carrying a battery. The two wing plates 212 respectively extend from two opposite sides of the carrying plate 211 to be fixed to interior surfaces of the two half casings 10 by welding.

With reference to Figs. 5 and 6, the supporting structure 22 extends from the battery seat 21 along a direction away from the operation opening 911 and abuts the interior surface of the frame tube 91. Thereby, the two opposite sides of the battery seat 21 and a side of the supporting structure 22 away from the battery seat 21 form a three-point stable supporting structure, and make the battery bracket 20 basically T-shaped.

Also, the battery seat 21 and the supporting structure 22 divide an interior of the frame tube 91 into multiple chambers separated from each other. In this embodiment, the multiple chambers are a first chamber S1 and two second chambers S2. The first chamber S1 is formed between the battery seat 21 and the operation opening 911 for containing a battery. Each one of the two second chambers S2 is formed between the battery seat 21, the supporting structure 22, and the interior surface of the frame tube 91. The two second chambers S2 are respectively located on two sides of the supporting structure 22 and adaptable for routing bicycle cables.

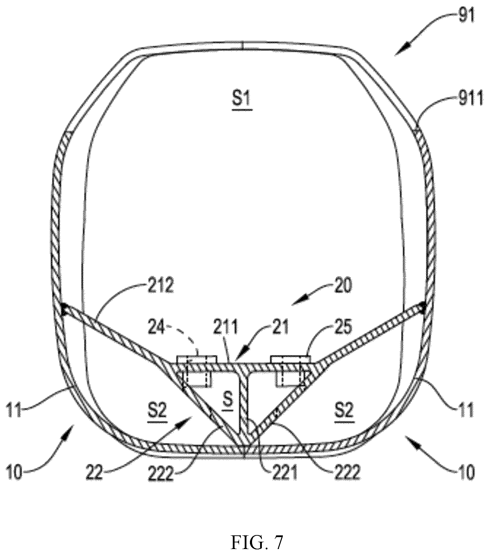

In the present invention, the supporting structure 22 abutting the interior surface of the frame tube 91 may have configurations shown in Figs. 6 and 7. With reference to Fig. 7, the supporting structure 22 simply contacts and abuts against the interior surface of the frame tube 91. With reference to Fig. 6, the supporting structure 22 is further connected to where the two half casings 10 abut via a single welded portion. Both Figs. 6 and 7 show the battery bracket 20 having the three contact points with the interior of the frame tube 91 and dividing the interior into the first chamber S1 and the two second chambers S2.

Manufacturing of the frame unit 90 basically includes the following steps:
A forming step: mold the two half casings 10 which are substantially symmetric and connectable to each other along a connecting direction. Each half casing 10 includes said frame tube portion 11. After the two half casings 10 are connected, the frame tube portions 11 jointly form the frame tube 91. Moreover, form the battery bracket 20 by casting or extrusion. The two half casings 10 and the battery bracket 20 are individually manufactured.

In the first embodiment, the two half casings 10 are formed by punching metal sheets to be monocoque structures. Specifically, with reference to Fig. 2, the frame tube portion 11 of each half casing 10 has two connecting edges 101 being connectable to two connecting edges 101 of the other half casing 10. The connection may be abutting or overlapping the connecting edges 101 to connect the two half casings 10 and to make the frame tube portions 11 of the two half casings 10 connected in a tubular structure having an enclosed space, conforming with the aforementioned substantial symmetry.

A connecting step: connect the frame tube portions 11 of the two half casings 10 to each other to form the frame tube 91, and fix the two wing plates 212 of the battery seat 21 of the battery bracket 20 to the interior surface of the frame tube 91 to increase structural strength. In this step, connection between the two half casings 10 and the battery bracket 20 may be carried out in different orders.

Specifically, the two half casings 10 may be symmetrically connected and welded to form the frame tube portions 11 into the frame tube 91. Afterwards, put in the battery bracket 20 from an opening on one of two opposite ends of the frame tube 91, extending a welding tool into the frame tube 91 from said opening and welding two opposite sides of the battery seat 21 to the interior surface of the frame tube 91. Then, the frame unit 90 is completed.

In other embodiments, the welding tool may extend into the frame tube 91 from the operation opening 911 or a through hole previously formed on a lateral side of the frame tube 91 for welding. After welding, surface grinding may be proceeded. In addition, the battery bracket 20 may be put in the frame tube 91 from the operation opening 911 after the two half casings 10 are welded together, or the battery bracket 20 may be welded to the two half casings 10 before the two half casings 10 are welded together. The connecting step is not limited to any specific operation order.

Further, the two half casings 10 and the battery bracket 20 may be welded via any one of conventional welding methods; the connecting step is not limited to any specific welding method.

Furthermore, the operation opening 911 may be formed via different methods. Specifically, the operation opening 911 may be cut out on the frame tube 91 after connection of the frame tube portions 11 of the two half casings 10. Otherwise, a notch can be directly formed in the punching process to form the frame tube portion 11. The notches jointly form the operation opening 911 when the two half casings 10 are welded together.

With the technical features described above, the frame unit 90 provided by the present invention has the following efficacy:
1. The battery seat 21 of the battery bracket 20 is connected to the interior surface of the frame tube 91 with two wing plates 212 and abuts the interior surface of the frame tube 91 with the supporting structure 22. Thereby, the frame unit 90 can be effectively strengthened without thickening the two half casings 10, meet requirements of both lightweight and great structural strength, and ensure safety of the electric bicycle.
2. The battery bracket 20 forms a steady support for a battery of an electric bicycle and allows the battery to be stably mounted and hidden inside the frame tube 91.
3. The battery seat 21 and the supporting structure 22 also divide the interior of the frame tube 91 into multiple chambers such as the first chamber S1 and the two second chambers S2. Besides the first chamber S1 for mounting a battery, the two second chambers S2 may be utilized for routing cables such as brake cables, shift cables, and electric cables. These cables can be routed in different chambers and prevented from kink, reducing possibility of operation insensitivity or even malfunction.

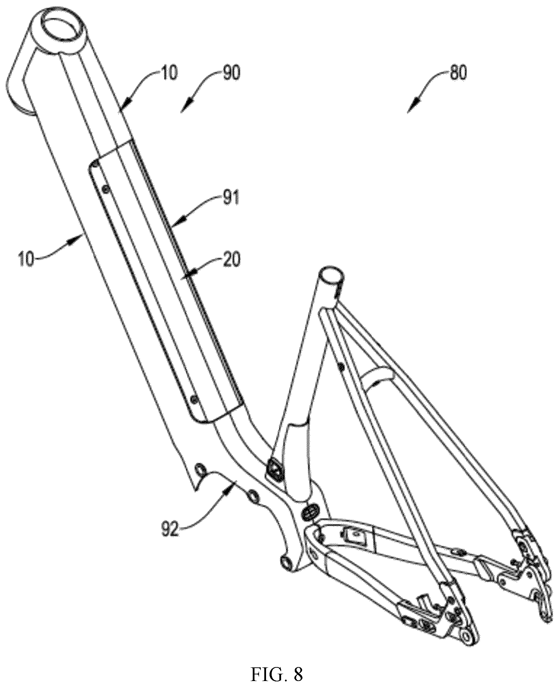

With reference to Fig. 8, after manufactured, the frame unit 90 is welded with other frame components to construct a bicycle frame 80 of an electric bicycle. Afterwards, a battery is fixed on the battery seat 21 of the battery bracket 20 from the operation opening 911 of the frame tube 91 to be stably mounted inside the frame tube 91.

With reference to Figs. 1, 2, and 8, in the first embodiment, the frame tube 91 is a down tube, and each one of the two half casings 10 has a motor mount portion 12. The motor mount portion 12 is connected to an end of the frame tube portion 11 and formed in one piece with the frame tube portion 11. When the two half casings 10 are connected, the motor mount portions 12 are connected to form a motor mount 92 for mounting a motor of an electric bicycle. Hence, a distance between the motor and the battery is shortened and a shorter wire can be used to connect them.

Further, with reference to Figs. 3, 4, and 6, the two wing plates 212 extend obliquely from the two opposite sides of the carrying board 211 toward the operation opening 911. In other words, an interval between the two wing plates 212 gradually expand toward the operation opening 911. Thereby, the two wing plates 212 are not only less likely to hinder mounting of the battery from the operation opening 911 but also limit a position of the battery on the carrying plate 211, which improves convenience and stability of mounting the battery.

With reference to Figs. 3, 4, and 6, in the first embodiment, the supporting structure 22 has three supporting plates respectively being a first supporting plate 221 and two second supporting plates 222. The first supporting plate 221 extends from a middle of the carrying plate 211. The two second supporting plates 222 respectively extend from two opposite sides of the carrying plate 211 to a side of the first supporting plate 221 away from the carrying plate 211. The two second supporting plates 222 and the carrying plate 211 form a structure with a triangular section abutting where the two half casings 10 are connected to each other. With reference to Fig. 6, each one of the two second supporting plates 222, the first supporting plate, and the carrying plate 211 enclose a chamber S therebetween.

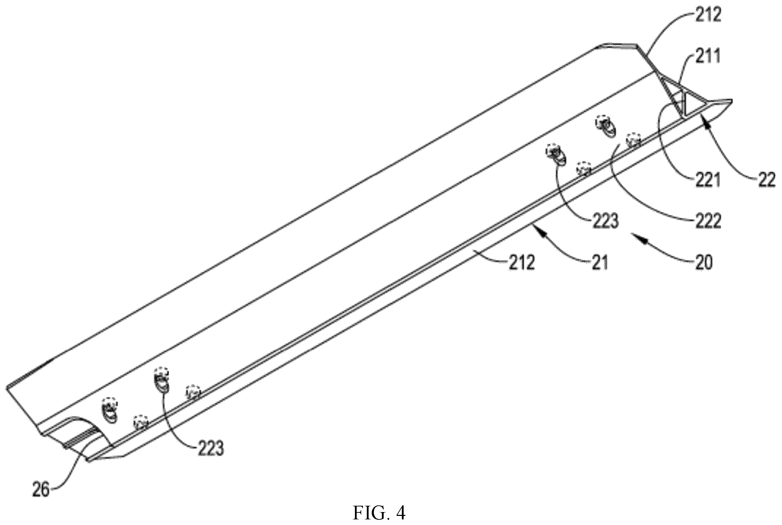

With reference to Figs. 2 and 6, for mounting a battery, the battery bracket 20 has multiple mounting holes 24 formed on the battery seat 21 and configured for mounting the battery thereon via bolts. Specifically, the battery bracket 20 has multiple piles 25 disposed on the battery seat 21 at spaced intervals and respectively located near two opposite ends of the battery seat 21. Each one of the multiple mounting holes 24 is formed through a respective one of the multiple piles 25. With reference to Figs. 3 and 4, each one of the two second supporting plates 222 has multiple aligning holes 223. Each one of the multiple aligning holes 223 is defined in alignment with a respective one of the multiple mounting holes 24 to prevent bolts from being blocked by the second supporting plates 222.

With reference to Fig. 5, the multiple mounting holes 24 (i.e. positions of the piles 25) are located within the scope of the operation opening 911. Thereby, the battery can be directly fixed to the battery seat 21 via bolts after being placed inside the frame tube 91 from the operation opening 911 without adjustment along the longitudinal direction of the frame tube 91, which improves convenience in operation.

Preferably, with reference to Fig. 6, the side of the supporting structure 22 away from the carrying plate 211 is welded to the interior surface of the frame tube 91. Specifically, the two opposite sides of the battery seat 21 are respectively fixed to the frame tube portions 11 of the two half casings 10, and the supporting structure 22 is welded to where the two half casings 10 are connected to each other. During manufacturing, the two half casings 10 and the supporting structure 22 can be welded together at the same time. This single welded portion not only reduces welding operations but also connects the two half casings 10 and the supporting structure 22 at the same spot. Stability of connection between these components and structural strength of the frame unit 90 are further increased.

Since the two half casings 10 of the frame tube 91 are formed by punching and then welded together, manufacturing efficiency of the frame tube 91 can be increased. Further, by welding the two half casings 10 and the battery bracket 20 at the same time, the frame tube 91 with required structural strength can be manufactured more efficiently, which makes the frame unit 90 of the present invention feasible and economic.

Furthermore, with reference to Figs. 2 and 5, the frame tube 91 has a cableway 912 defined therethrough. Cables such as brake cables and shift cables can be directed into the frame tube 91 through the cableway 912 and disposed in the chamber formed by the battery seat 21 and the supporting structure 22. These cables can be thereby hidden inside the frame tube 91.

Specifically, the frame tube 91 has a first end and a second end being opposite to each other in the longitudinal direction. The cableway 912 is located near the first end of the frame tube 91, and the battery bracket 20 is located between the cableway 912 and the second end of the frame tube 91. In other words, the cableway 912 is located outside a location of the battery bracket 20 in the longitudinal direction of the frame tube 91, which is easy for directing cables into the second chambers S2 from the cableway 912. More preferably, with reference to Figs. 3 to 5, the battery bracket 20 has a recess 26 formed on an end of the battery bracket 20 near the cableway 912 and recessed on the supporting structure 22. The supporting structure 22 thus has a length shorter than that of the battery seat 21. When cables are directed into the frame tube 91 from the cableway 912, the recess 26 provides larger room for ends of cables to extend into the second chambers S2, which improves ease of cable routing.

In addition, with reference to Fig. 5, in the first embodiment, the battery bracket 20 extends toward the first end and the second end of the frame tube 91 to have a length. The operation opening 911 also extends toward the first end and the second end of the frame tube 91 to have a length. The length of the battery bracket 20 is larger than the length of the operation opening 911, and two opposite ends of the battery bracket 20 exceed the scope of the operation opening 911. Thus, the structure-strengthening effect of the battery bracket 20 covers the whole scope of the operation opening 911, which ensures that every portion of the frame unit 90 has sufficient structural strength, meets related regulations, and ensures safety of riding.

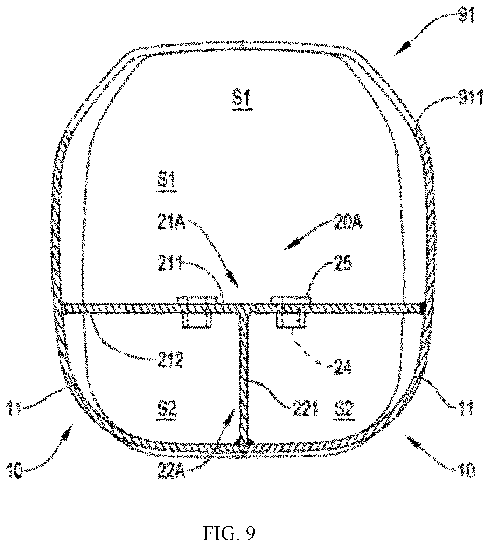

Fig. 9 shows a second embodiment of the frame unit in accordance with the present invention. The second embodiment is different from the first embodiment in that the battery seat 21A of the battery bracket 20A forms a flat surface, and the supporting structure 22A only has the first supporting plate 221 extending from the battery seat 21A to abut the interior surface of the frame tube 91. I.e., the battery bracket 20 is the simplest T-shaped skeleton, which also strengthens the frame unit 90, forms a steady support for a battery, and divides the interior of the frame tube 91 into the first chamber S1 and the two second chambers S2 for convenience of routing cables as well.

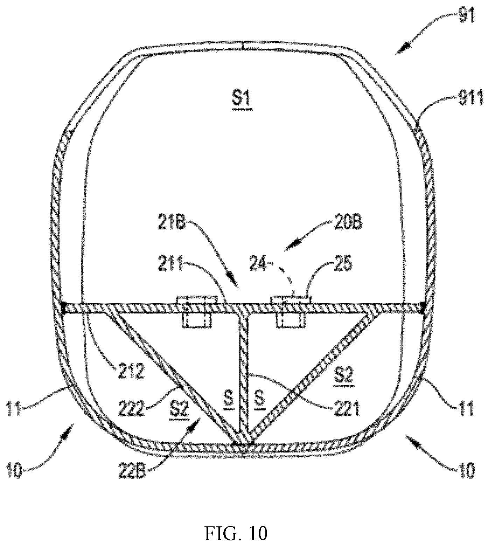

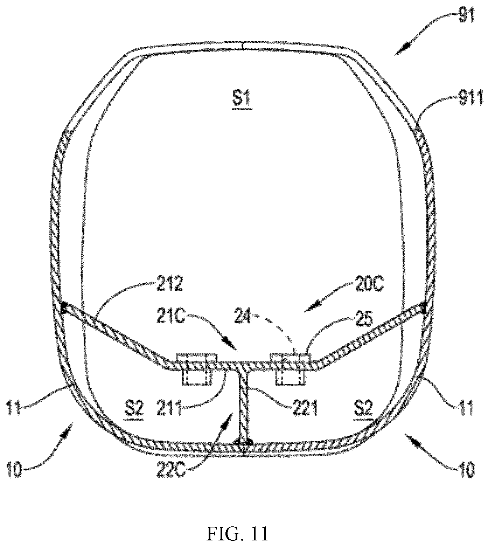

Figs. 10 and 11 show a third and a fourth embodiment of the frame unit in accordance with the present invention. Differently, in the third embodiment, the battery seat 21B of the battery bracket 20B forms a flat surface; i.e., the two wing plates 212 of the battery seat 21B extend horizontally from the carrying plate 211 to be fixed to the two half casings 10. The supporting structure 22B has the first supporting plate 221 and the two second supporting plates 222 as in the first embodiment. In the fourth embodiment, the two wing plates 212 of the battery seat 21C of the battery bracket 20C extend obliquely as in the first embodiment, but the supporting structure 22C only has the first supporting plate 221 without the two second supporting plates 222.

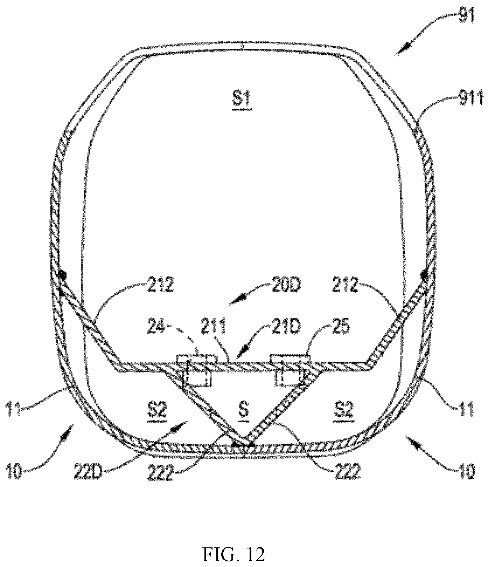

With reference to Fig. 12, a fifth embodiment of the frame unit in accordance with the present invention is different from the above-mentioned embodiments in that the two wing plates 212 of the battery seat 21D of the battery bracket 20D extend more obliquely and are respectively fixed to higher spots on the interior surface of the frame tube 91 (the two half casings 10). That is, the two wing plates 212 are nearer to the operation opening 911. Since the operation opening 911 weakens structure of the frame tube 91, the two wing plates 212 nearer to the operation opening 911 increase overall structural strength of the frame tube 91 more effectively. The frame tube 91 definitely has sufficient structural strength without thickening the two half casings 10.

Also, in the fifth embodiment, the supporting structure 22D only has the two second supporting plates 222 without the first supporting plate 221 in the first embodiment, and the two second supporting plates 222 respectively extend from positions near the middle of the carrying plate 211 instead of the two opposite ends of the carrying plate 211. In other words, the two second supporting plates 222 and the two wing plates 212 extend on different inclined surfaces. Thus, the two second supporting plates 222 support the carrying plate 211 at positions nearer to the center of gravity of the battery on the carrying plate 211. Thus, the carrying plate 211 can stably carry the battery even without the first supporting plate 221.

In the embodiments described above, the battery seats 21, 21A, 21B, 21C, 21D and the supporting structures 22, 22A, 22B, 22C, 22D of the battery brackets 20, 20A, 20B, 20C, 20D have different configurations. They all increase structural strength of the frame unit 90, support a battery, and divide different chambers for cabling. The battery bracket of the present invention is thus not limited to any specific configuration.

In each one of the embodiments described above, the supporting structure 22/22A/22B/22C/22D has the first supporting plate 221 and/or the two second supporting plates 222 to support the battery seat 21. In other embodiments, the supporting structure may have multiple ribs or multiple shorter plates spaced from each other instead of the two second supporting plates 222 to assist the first supporting plate 221, and these ribs or shorter plates may even be spaced from instead of abutting where the two half casings 10 are connected to each other. The supporting structure of the present invention is not limited to the first supporting plate 221 and the two second supporting plates 222.

With reference to Figs. 6, 7, and 9 to 11, in each one of the above-mentioned embodiments, the operation opening 911 is located on a top side of the frame tube 91, and the battery bracket 20, 20A, 20B, 20C, 20D is located near a bottom side of the frame tube 91. Specifically, the carrying plate 211 of the battery seat 21, 21A, 21B, 21C, 21D is below a half of a height of the frame tube 91. This lowers the center of gravity of the frame unit 90 before and after mounting a battery inside the frame tube 91, which improves controllability of the electric bicycle and is beneficial to safety of riding. Also, the first chamber S1 has a greater volume for containing the battery therein.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A frame unit (90) for an electric bicycle, the frame unit (90) **characterized in** being made of metal and comprising:
a frame tube (91) having
two half casings (10) connected to each other symmetrically; and
an operation opening (911) formed on the two half casings (10); and
a battery bracket (20, 20A, 20B, 20C, 20D) disposed inside the frame tube (91) and having
a battery seat (21, 21A, 21B, 21C, 21D) located in alignment with the operation opening (911) and having
a carrying plate (211); and
two wing plates (212) respectively extending from two opposite sides of the carrying plate (211) to be fixed to an interior surface of the frame tube (91); and
a supporting structure (22, 22A, 22B, 22C, 22D) extending from the battery seat (21, 21A, 21B, 21C, 21D) along a direction away from the operation opening (911) to abut the interior surface of the frame tube (91).

2. The frame unit (90) for an electric bicycle as claimed in claim 1, wherein the two wing plates (212) respectively extend obliquely from the two opposite sides of the carrying plate (211) toward the operation opening (911).

3. The frame unit (90) for an electric bicycle as claimed in claim 1, wherein the supporting structure (22, 22B, 22D) has two supporting plates (222) extending from the battery seat (21, 21B, 21D) obliquely to be connected to each other and form a structure with a triangular section abutting where the two half casings (10) are connected to each other.

4. The frame unit (90) for an electric bicycle as claimed in claim 1, wherein the supporting structure (22, 22A, 22B, 22C) has a supporting plate (221) extending from a middle of the battery seat (21, 21A, 22B, 21C) to abut where the two half casings (10) are connected to each other.

5. The frame unit (90) for an electric bicycle as claimed in claim 1, wherein
the supporting structure (22, 22B) has three supporting plates (221, 222);
one of the three supporting plates (221) extends from a middle of the battery seat (21, 21B) to abut where the two half casings (10) are connected to each other; and
the other two of the three supporting plates (222) extend from the battery seat (21, 21B) obliquely to be connected to each other so as to form a structure with a triangular section abutting where the two half casings (10) are connected to each other.

6. The frame unit (90) for an electric bicycle as claimed in any one of claims 1 to 5, wherein the supporting structure (22, 22A, 22B, 22C, 22D) is connected to where the two half casings (10) abut each other via a single welded portion.

7. The frame unit (90) for an electric bicycle as claimed in any one of claims 1 to 5, wherein the frame tube (91) has a cableway (912) defined therethrough and located outside a scope of the battery bracket (20, 20A, 20B, 20C, 20D) on the frame tube (91).

8. The frame unit (90) for an electric bicycle as claimed in claim 7, wherein the supporting structure (22, 22A, 22B, 22C, 22D) has a recess (26) recessed on an end of the supporting structure (22, 22A, 22B, 22C, 22D) near the cableway (912) such that a length of the supporting structure (22, 22A, 22B, 22C, 22D) is shorter than a length of the battery seat (21, 21A, 21B, 21C, 21D).

9. The frame unit (90) for an electric bicycle as claimed in any one of claims 1 to 5, wherein two opposite ends of the battery bracket (20, 20A, 20B, 20C, 20D) exceed a scope of the operation opening (911).

10. The frame unit (90) for an electric bicycle as claimed in any one of claims 1 to 5, wherein the carrying plate (211) is below a half of a height of the frame tube (91).
